# EUROPEAN PATENT SPECIFICATION

(11) **EP 2 333 415 B1**
(45) Date of publication and mention of the grant of the patent: **19.08.2015**
(21) Application number: 09818996.2
(22) Date of filing: 08.10.2009
(51) Int. Cl.: F23N 5/18, G01F 3/22, G01F 1/66, G01F 1/68, F23N 1/00, F23N 5/20, F23N 5/24, G01F 15/00

(54) **GAS CIRCUIT BREAKER**
DRUCKGASSCHALTER
DISJONCTEUR À GAZ

(30) Priority: 08.10.2008 JP 2008261444; 20.05.2009 JP 2009121649
(43) Date of publication of application: 15.06.2011
(73) Proprietor: Panasonic Corporation, Kadoma-shi Osaka 571-8501 (JP)
(72) Inventor: UEKI, Kouichi, Chuo-ku, Osaka-shi, Osaka 540-6207 (JP); OOTANI, Takuhisa, Chuo-ku, Osaka-shi, Osaka 540-6207 (JP); IWAMOTO, Ryuji, Chuo-ku, Osaka-shi, Osaka 540-6207 (JP); ASANO, Kazutaka, Chuo-ku, Osaka-shi, Osaka 540-6207 (JP)
(74) Representative: Schwabe - Sandmair - Marx
(86) International application number: PCT/JP2009/005254
(87) International publication number: WO 2010/041456

(56) References cited:
- EP-A1- 2 131 162
- EP-A1- 2 177 829
- JP-A- 5 067 283
- JP-A- 7 151 577
- JP-A- 9 126 853
- JP-A- 2000 213 742
- JP-A- 2002 108 987
- JP-A- 2008 134 065
- JP-A- 2008 134 125
- JP-B- 6 044 936

## Description

### Technical Field

The present invention relates to a gas cutoff device, particularly, a gas cutoff device that prevents an erroneous cutoff due to a usage time limiting function even when a use flow rate is changed by a flow rate control of an appliance itself.

### Background Art

Hitherto, as this type of gas cutoff device, a gas cutoff device has been disclosed which includes: a flow rate measurement unit that outputs a flow rate signal corresponding to an amount of passed gas; an individual appliance estimation unit that, when the flow rate signal increases or decreases, estimates the increase or decrease in an individual appliance during use and outputs the increased or decreased estimated individual calculated flow rate of the appliance and the usage time; an individual flow rate registration unit that registers the flow rate of the individual appliance to be used in advance and outputs the registered individual flow rate and the usage time; an individual flow rate memory unit that stores the registered individual flow rate; an abnormal flow rate decision unit that outputs an individual abnormal signal when the increased or decreased estimated individual calculated flow rate of the appliance is not contained in the registered individual flow rate amounts of the individual flow rate memory unit and when the increased or decreased continuous usage time of the appliance continues for longer than a first predetermined time; a notification unit that receives the individual abnormal signal and provides a warning notification of the abnormality of the gas flow rate, or a cutoff unit that cuts off a gas path; and a constant individual flow rate registration unit that registers the estimated individual calculated flow rate of the individual flow rate estimation unit in the individual flow rate memory unit when the estimated individual calculated flow rate of the appliance of the individual appliance estimation unit is not contained in the registered individual flow rates of the individual flow rate memory unit and the usage time of the appliance of the individual appliance estimation unit is longer than a second predetermined time and is shorter than the first predetermined time (for example, see Patent Literature 1).

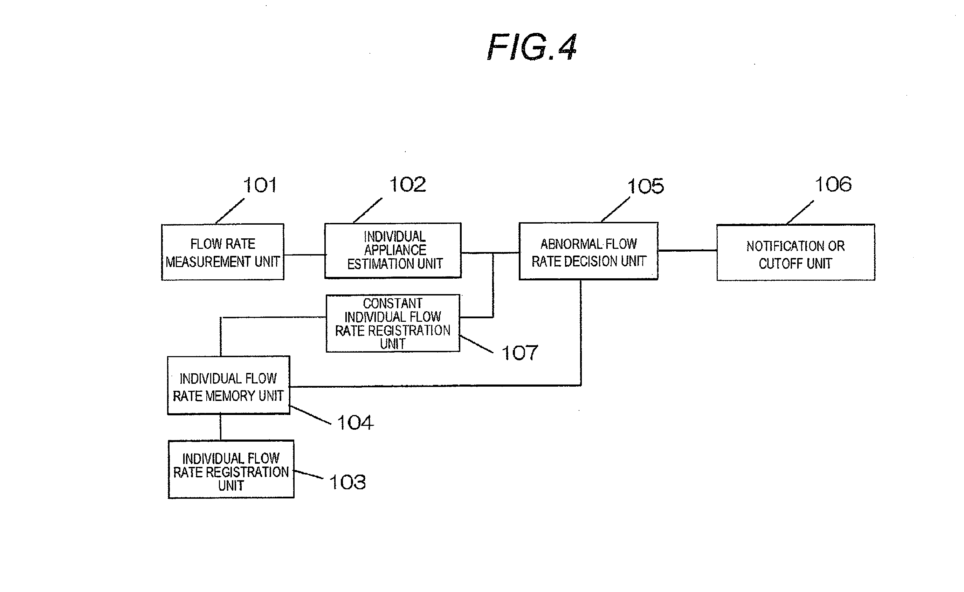

A configuration of the gas cutoff device of the related art will be briefly described using Fig. 4. Reference numeral 101 is a flow rate measurement unit which corresponds to a flow rate sensor attached to a gas meter. Reference numeral 102 is an individual appliance estimation unit that calculates an average flow rate for a certain measurement period (30 seconds) from flow rate signals of the flow rate sensor, estimates an increase or decrease in the individual flow rate during use based on an increase or decrease in the average flow rate, and outputs an increased or decreased estimation individual calculated flow rate Q of the appliance and the usage time. The individual appliance estimation unit 102 decides that, when the average flow rate increases, the increased gas appliance is used by that increase amount, decides that, when the average flow rate decreases, the decreased gas appliance is stopped by that decrease amount, and performs estimation in regard to the individual appliance during use. Reference numeral 103 is an individual flow rate registration unit which corresponds to a setting unit that sets the flow rate (Qi) of the individual appliance used at home in advance. Reference numeral 104 is an individual flow rate memory unit that stores the flow rate (Qi) of the individual appliance of the individual flow rate registration unit 103 and the flow rate of the constant individual flow rate registration unit 107 in order of Q1, Q2, Q3, ..., Qn. Reference numeral 105 is an abnormal flow rate decision unit that outputs an individual abnormal signal E if the estimated individual flow rate Q to be output from the individual appliance estimation unit 102 is not contained in [Q1, Q2, Q3, ..., Qn] of the individual flow rate memory unit 104 and the estimated individual flow rate Q continues for longer than the first predetermined time (10 minutes). Reference numeral 106 is a notification unit or a cutoff unit and includes an LCD or an LED that receives the individual abnormal signal E and provides a warning notification thereof, or a cutoff valve that cuts off a gas path. Reference numeral 107 is an abnormal individual flow rate registration unit that outputs the estimated individual flow rate Q to the individual flow rate memory unit 104 when the estimated individual flow rate Q to be output from the individual flow rate estimation unit 102 is greater than or equal to the second predetermined time (three minutes) and within the first predetermined time (ten minutes).

Next, an operation of the configuration of the example of the related art will be described. The average flow rate is calculated based on the flow rate signal of the flow rate measurement unit 101. A changed flow rate to the average flow rate from the previous average flow rate is obtained, and it is determined whether or not the change is a change of an increase or a change of a decrease. The estimated individual calculated flow rate Q is obtained by the respective processing. It is determined whether the estimated individual calculated flow rate Q, which is newly obtained as a consequence of the increase or decrease processing, is contained in the individual flow rate memory unit 104 and is being used for the first predetermined time (for 10 minutes). When the flow rate is not contained and usage is for longer than 10 minutes, the notification unit or the cutoff unit 106 is operated, and when the flow rate is not contained or usage is not for longer than 10 minutes, it is determined whether the flow rate is a non-registered flow rate, is being used for longer than 3 minutes or the usage time is shorter than or equal to 10 minutes, respectively. If the estimated individual calculated flow rate Q satisfies all conditions, the constant individual flow rate registration unit 107 performs the processing of the registration in the individual flow rate memory unit 104.

Now, when, due to the simultaneous use of a plurality of appliances, there is an increase in average flow rate termed Qt (for example, Q2 + Q3) and the usage time is 7 minutes, that is, the average flow rate decreases after 7 minutes, the estimated individual flow rate Qt is output by the individual appliance estimation unit 102. The estimated individual flow rate Qt is registered in the individual flow rate memory unit 104 by deciding that the usage time is longer than or equal to 3 minutes and shorter than or equal to 10 minutes using the constant individual flow rate registration unit 107. Thereafter, since the flow rate is registered in the individual flow rate memory unit 104, even if the flow rate is obtained for longer than 10 minutes, the cutoff is not performed. That is, it is possible to reduce an erroneous cutoff due to a large number of gas appliances in a case in which the appliances are started concurrently. Furthermore, when there is a new individual flow rate Qk (longer than 3 minutes and shorter than 10 minutes) due to the purchase and exchange of an appliance or the like, the estimated individual flow rate Qk is output by the individual appliance estimation unit 102. The estimated individual flow rate Qk is registered in the individual flow rate memory unit 104 by deciding that the usage time is longer than or equal to 3 minutes and shorter than or equal to 10 minutes by the constant individual flow rate registration unit 107.

Hereinafter, since the flow rate is registered in the individual flow rate memory unit 104, even if the flow rate is obtained for longer than 10 minutes, the cutoff is not performed. The individual appliances to be used in the respective homes are newly stored, so an accident caused by gas leakage due to a flow rate other than the individual appliances can be prevented in advance, and it is possible to prevent an erroneous cutoff due to the concurrent starting of the appliances, the purchase and exchange of an appliance or the like.

However, in the configuration of the related art, there is provided a function of preventing erroneous cutoff by cutting off the gas path when a flow rate which is not registered in the individual flow rate memory unit is newly detected, or by newly registering the flow rate as a registered individual flow rate, but when the individual appliance estimation unit performs estimation regarding the individual appliance, in a case where the use of the appliance registered as the registered individual flow rate is stopped in a state in which the flow rate has been gradually changed within a normal range by the flow rate control of the appliance itself, there is a case where the flow rate becomes a value different from the individual flow rate at the time of the registration, and when deleting the registered individual flow rate, the wrong registered individual flow rate is erroneously deleted. In this case, when a small registered individual flow rate is deleted and a large one remains, the limitation time enabling the continuous use of the appliance is reduced, the gas cutoff valve is operated for slightly shorter than expected and the supply of the gas is stopped. In contrast, when a large registered individual flow rate is deleted and a small one remains, the continuous use limitation time is extended, and the appliance having the large usage flow rate is used. Thus, there is a problem in terms of safety.

For example, there is a case where, since a hot water heater is maintained at a setting temperature when using a shower or the like, the gas flow rate is controlled depending on the temperature deviation and the combustion amount is variable, or there is a case where, since a fan heater or the like is maintained at a fixed temperature, the gas flow rate is controlled and the combustion amount is variable. In such cases, there is a case where the estimated individual calculated flow rate, which is obtained by the individual appliance estimation unit and is registered in the individual flow rate registration unit at the time of the start of appliance use, is different from the initial estimated individual calculated flow rate when the gas flow rate gradually decreases over time due to the combustion amount control depending on the load fluctuation. Generally, when the other appliance is stopped or a large flow rate change is generated during the use of a plurality of appliances, the estimated individual calculated flow rate of the individual flow rate registration unit is registered based on the change amount, but when being gradually changed at a small change rate like the above-mentioned type of use, the registration processing of the estimation individual calculated flow rate is not performed. When performing the registration processing of the estimation individual calculated flow rate at the timing of the appliance use stop or the appliance use addition, there is a case where the total value of an actual flow rate, which is reduced by the combustion amount control, differs from the registered flow rate. In this case, by monitoring in a state in which the total value of the registered flow rate is greater than the actual flow rate, the appliance continuous use limitation time is slightly shifted and the erroneous cutoff is prevented. That is, there is a problem in that, since the monitoring different from the actual use flow rate is performed, the erroneous cutoff cannot be prevented.

Patent Literature 2 describes a gas shut-off device to appropriately secure a use restriction function of a tool whose use gas amount varies. This gas shut-off device comprises: a flow detecting means for measuring the gas flow; a flow arithmetic means for calculating the flow value from the detected value of the flow detecting means; an average flow arithmetic means for averaging instantaneous flow values to determine an average flow value; a flow storing means for storing the average flow value; a flow variation determining means for determining that flow varies when the difference between the average flow value and the stored value of the flow storing means is larger than a predetermined first variation value; a flow registering means for registering/deleting a part corresponding to the flow variation when the flow variation determining means determines that flow varies; and a registered flow correcting means for correcting the registered flow so as to make it close to the average flow value using the differential flow when the flow variation determining means determines that flow does not vary and the differential value between the average flow value and the registered flow value is a second variation value or more.

Patent Literature 3 describes a gas shut-off device to monitor a gas tool suitable for actual use by variation of use flow by control of a tool itself. In this respect, an average flow arithmetic means finds average flow from a signal of a flow detecting means, a flow variation detecting means determines new use from the variation in use flow, a flow registering means registers the variation flow, an abnormality determining means determines abnormality by comparing the registered flow with the monitored value of a monitored value storing means. There can be a micro flow variation that is not determined as flow variation by the flow variation detecting means by control of the tool itself. When a flow estimating means detects the micro flow variation by comparing the present average flow with the average flow stored at the registering time after flow variation, the registered flow value of the flow registering means is corrected and registered using the average flow stored at the flow registering time after detection of the flow variation, the abnormality determining means monitors and determines the monitored stored value and the registered flow, and a shutting off means shuts off the flow passage in abnormal state.

### Citation List

### Patent Literature

Patent Literature 1: JP-A-7-44239
Patent Literature 2: JP 2008 134065 A
Patent Literature 3: JP 2008 134125 A

### SUMMARY OF THE INVENTION

The invention is defined by the subject-matter of independent claim 1. The dependent claim 2 is directed to an advantageous embodiment.

### ADVANTAGES OF THE INVENTION

Avantageously, it is provided a gas cutoff device that does not have erroneous cutoff and that has high safety, by correcting the registered individual flow rate based on the differential data in a case where the registered individual flow rate after deleting a predetermined registered individual flow rate is compared to the average flow rate value to be obtained by the flow rate calculation unit and a difference which is greater than a predetermined value appears when detecting the appliance use stop, even in a state in which the gas flow rate is gradually changed at a small change rate, thereby making the registered individual flow rate approximate to the actual use flow rate.

Advantageously, when an appliance is used and its appliance flow rate is being registered, after a minute flow rate change which the flow rate change decision unit cannot decide as the flow rate change continues, a flow rate change is determined when the use of a certain appliance is stopped and the flow rate is deleted by the flow rate registration unit. In this case, if there is a difference between the average flow rate after the flow rate registration and registered flow rate total value, the difference between the average flow rate and the registered flow rate total value is obtained again. The differential flow rate is registered again in the case of the positive flow rate difference, while the decrease correction is performed by the lower registered flow rate registered by the obtained flow rate difference in the case of the negative flow rate difference. Thus, the total flow rate of the use appliance coincides with the total of the flow rate registration values to be monitored, and it is possible to perform the monitoring at the corresponding usage time. Furthermore, it is possible to avoid a case where the flow rate which is minutely changed is re-registered erroneously by considering as the appliance, and the usage time of the flow rate is monitored, and the usage time is cut off early, thereby increasing the number of unnecessary mobilization times of a gas provider or a case where an appliance such as a heater, which can be naturally used for a long time, is stopped in a short time, thereby having an adverse effect on convenience. Moreover, the safety is high.

Advantageously, when a plurality of appliances is used and a plurality of appliance flow rates are registered, even if a minute increasing change in flow rate or a minute decreasing change in flow rate which the flow rate change deciding unit cannot decide as a change appears, by re-registering the flow rate difference between the obtained average using total flow rate of appliances and the total flow rate of the flow rate registration unit to be monitored, or by decreasing and correcting the registered flow rate value again, the monitoring is performed by always making the using total flow rate of appliances coincide with the total flow rate of the flow rate registration unit to be monitored. Thus, there are no lack in the appliance flow rates to be monitored. Thus, it is possible to avoid a case where the flow rate which is minutely changed is re-registered erroneously by considering as the appliance, and the usage time of the flow rate is monitored, and the usage time is cut off early, thereby increasing the number of unnecessary mobilization times of a gas provider or a case where an appliance such as a heater, which can be naturally used for a long time, is stopped in a short time, thereby having an adverse effect on convenience. Therefore, there is an effect in which reliability and safety are high.

### Brief Description of Drawings

Fig. 1 is a schematic diagram that shows an installation form of a gas cutoff device and gas appliances in embodiments of the present invention.
Fig. 2 is a control block diagram of a cutoff apparatus according to a first embodiment of the present invention.
Fig. 3 is a control block diagram of the gas cutoff device according to a second embodiment of the present invention.
Fig. 4 is a control block diagram of a gas cutoff device of the related art.

### Description of Embodiments

According to a first aspect of the invention, there is provided a gas cutoff device that monitors using states of a plurality of gas appliances and cuts off the supply of gas at the time of abnormality occurrence, the gas cutoff device including: a flow rate detection unit that is configured to measure a flow rate; a flow rate calculation unit that is configured to calculate values of instant flow rates from a detection value of the flow rate detection unit; an average flow rate calculation unit that is configured to obtain an average flow rate from the instant flow rates obtained by the flow rate calculation unit; a flow rate change decision unit that is configured to decide whether or not an appliance change flow rate appears based on the obtained average flow rate; an increase flow rate registration unit that is configured to register, as a registered flow rate, an amount of the flow rate change at the time of increase change decision by the flow rate change decision unit; a decrease flow rate registration unit that is configured to reduce and correct the registered flow rate near an amount of the flow rate change at the time of decrease change decision by the flow rate change decision unit; a registered flow rate summarization unit that is configured to calculate a total value of the registered flow rate; a flow rate difference decision unit that is configured to calculate a flow rate difference from the average flow rate and the registration total flow rate, to cause the increase flow rate registration unit to register the flow rate difference when the flow rate difference is positive, and to cause the decrease flow rate registration unit to perform a flow rate output which reduces and corrects the registered flow rate from a low level when the flow rate difference is negative; an monitoring value memory unit that is configured to store a decision value for monitoring usage states of the appliances; an abnormality decision unit that is configured to decide whether or not an abnormality exists from the registered flow rate of the flow rate registration unit and the decision value of the monitoring value memory unit; and a cutoff unit that is configured to cut off the supply of gas at the time of an abnormality decision established by the abnormality decision unit.

The appliance use is detected by the flow rate detection unit and is converted into the instant flow rate by the flow rate calculation unit to obtain the average flow rate. As the appliance is used, the flow rate is registered by the increase flow rate registration unit. When the appliance is used and its appliance flow rate is being registered, after a minute flow rate change which the flow rate change decision unit cannot decide as the flow rate change continues, a flow rate change is determined when the use of a certain appliance is stopped and the flow rate is deleted by the flow rate registration unit. In this case, based on a difference between the obtained average flow rate and the total value of the registered flow rate, the difference is registered again in the case of the positive, whereas the flow rate difference is decreased and corrected from the lower registered flow rate in the case of the negative. Thus, the flow rates of all of the use appliances are re-registered and it is possible to perform the monitoring at the corresponding usage time. Thus, it is possible to avoid a case where the flow rate which is minutely changed is re-registered erroneously by considering as the appliance, and the usage time of the flow rate is monitored, and the usage time is cut off early, thereby increasing the number of unnecessary mobilization times of a gas provider or a case where an appliance such as a heater, which can be naturally used for a long time, is stopped in a short time, thereby having an adverse effect on convenience. Moreover, the safety is high.

According to a second aspect of the invention, there is provided a gas cutoff device that monitors using states of a plurality of gas appliances and cuts off the supply of gas at the time of abnormality occurrence, the gas cutoff device including: a flow rate detection unit that is configured to measure a flow rate; a flow rate calculation unit that is configured to calculate values of instant flow rates from a detection value of the flow rate detection unit; an average flow rate calculation unit that is configured to obtain an average flow rate from the instant flow rates obtained by the flow rate calculation unit; a flow rate change decision unit that is configured to decide whether or not an appliance change flow rate appears based on the obtained average flow rate; an increase flow rate registration unit that is configured to register, as a registered flow rate, an amount of the flow rate change at the time of increase change decision by the flow rate change decision unit; a decrease flow rate registration unit that is configured to reduce and correct the registered flow rate near an amount of the flow rate change at the time of decrease change decision by the flow rate change decision unit; a registered flow rate summarization unit that is configured to calculate a total value of the registered flow rates; a flow rate difference decision unit that is configured to calculate a flow rate difference from the average flow rate and the registration total flow rate, to cause the increase flow rate registration unit to register the flow rate difference when the flow rate difference is positive, and to cause the decrease flow rate registration unit to perform a flow rate output which reduces and corrects the registered flow rate from a low level when the flow rate difference is negative; a flow rate difference comparison unit that is configured to cause the registration by the increase flow rate registration unit or the decrease correction by the decrease flow rate registration unit when the flow rate difference is greater than or equal to a predetermined value; an monitoring value memory unit that is configured to store a decision value for monitoring usage states of the appliances; an abnormality decision unit that is configured to decide whether or not an abnormality exists from the registered flow rate of the flow rate registration unit and the decision value of the monitoring value memory unit; and a cutoff unit that is configured to cut off the supply of gas at the time of an abnormality decision established by the abnormality decision unit.

The appliance use is detected by the flow rate detection unit and is converted into the instant flow rate by the flow rate calculation unit to obtain the average flow rate. As the appliance is used, the flow rate is registered by the increase flow rate registration unit. When the appliance is used and its appliance flow rate is being registered, after a minute flow rate change which the flow rate change decision unit cannot decide as the flow rate change continues, a flow rate change is determined when the use of a certain appliance is stopped and the flow rate is deleted by the flow rate registration unit. In this case, it is determined that a flow rate difference between the obtained average flow rate and the total value of the registered flow rate, and the flow rate registration correction is performed to the flow rate registration unit when the flow rate difference is equal to or greater than a predetermined flow rate value corresponding to the appliance flow rate. The difference is registered again in the case of the positive by the predetermined value or more, whereas the flow rate difference is decreased and corrected from the lower registered flow rate in the case of the negative by the predetermined value or more. Thus, the flow rates of all of the use appliances are re-registered and it is possible to perform the monitoring at the corresponding usage time. Thus, it is possible to avoid a case where the flow rate which is minutely changed is re-registered erroneously by considering as the appliance, and the usage time of the flow rate is monitored, and the usage time is cut off early, thereby increasing the number of unnecessary mobilization times of a gas provider or a case where an appliance such as a heater, which can be naturally used for a long time, is stopped in a short time, thereby having an adverse effect on convenience. Moreover, the safety is high.

### (First Embodiment)

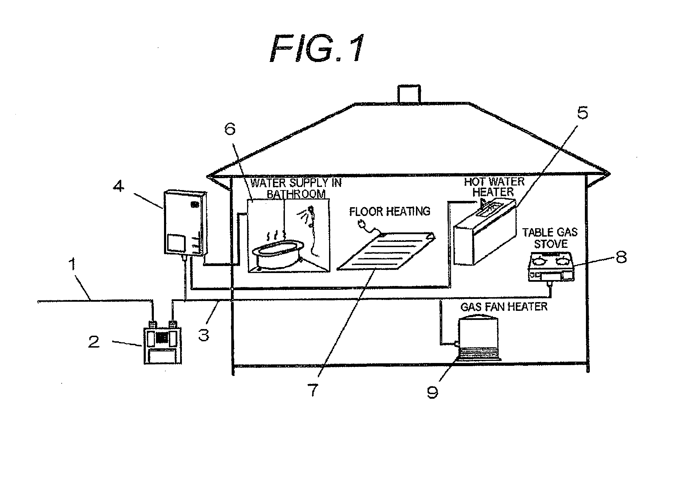

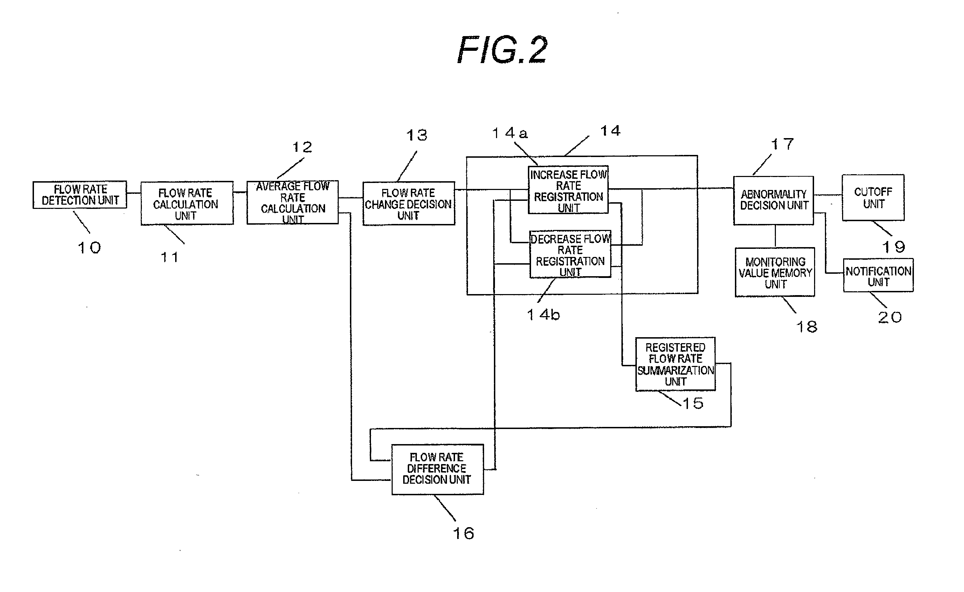

Fig. 1 is a schematic diagram that shows an installation form of a gas cutoff device according to a first embodiment of the present invention, and Fig. 2 is a control block diagram of the gas cutoff device.

A gas cutoff device 2 is installed in an inlet part of a gas supply pipe 1 of each home, and gas is supplied by branching pipes from a gas pipe 3 after passing through the gas cutoff device 2 and being piped to places where various gas appliances are installed. For example, a hot water heater 4 is installed outdoors, the hot water boiled by the hot water heater 4 is supplied to a hot water faucet 5 of a kitchen, a bathroom 6 where a bathtub or a shower device is installed, and a floor heating 7 installed in a living room or the like via a water pipe, and various use shapes are formed.

Furthermore, in the room, the gas is supplied to a table gas stove 8 installed in the kitchen, and a gas fan heater 9 installed in the living room, a bedroom or the like and is suitably used as necessary.

Moreover, when the installed gas appliance is used and gas is consumed, the usage amount thereof is measured by the gas cutoff device 2, and the usage amount is accumulated and stored as a detection measurement value. The data stored in the gas cutoff device 2 is subjected to predetermined information processing based on a regular data request from a gas provider, and then the data is used in a user and a gas provider as information relating to a gas charge, a gas usage amount or a discount service provided by a gas provider, or the like.

Moreover, in the gas cutoff device 2, a gas flow path having a gas inlet and a gas outlet is formed, and a flow rate detection unit 10 detecting the gas flow rate is provided. In addition, as the flow rate detection unit 10, various types exist; there are one in which an ultrasonic signal is sent from one side to the other side by a pair of ultrasonic sensors installed in the flow path shown in the present embodiment, and the usage gas flow rate is detected from the propagation time thereof, one in which a heat wire type sensor is provided in the flow path and the flow rate is obtained from an impedance changed by a flow, or one in which the gas amount is detected by a diaphragm and a mechanical motion of the diaphragm is converted to an electric pulse signal by a magnet and lead switch or a magnetic resistance element to detect the flow rate.

The flow rate detection unit 10 using the ultrasonic sensor will be briefly described. A first transceiver, which transmits and receives an ultrasonic wave, and a second transceiver, which receives and transmits the ultrasonic wave, are disposed oppositely in a flow direction, and the switch-over of the transmission and reception is possible by a control circuit. The signals of the first transceiver and the second transceiver are processed and the flow rates thereof are measured, whereby the ultrasonic wave is transmitted from the upstream to the downstream. Moreover, the ultrasonic wave is received by the second transceiver and the propagation time is measured by a timer unit.

Next, the ultrasonic signal is transmitted from the downstream to the upstream by the switch-over unit and the propagation time is measured. Moreover, a flow rate value is obtained by the flow rate calculation unit 11 by multiplying a flow rate coefficient corresponding to the size of the flow path or the flow state of the fluid by a propagation time difference of the ultrasonic wave between the first transceiver and the second transceiver. The flow rate is obtained for each of preset periods as an instant flow rate value.

Moreover, the instant flow rate value measured and obtained for each period is input to an average flow rate calculation unit 12, and a predetermined number of instant flow rate values is gathered and calculated as an average flow rate value. The flow rate change decision unit 13 decides a change in whether or not the appliance flow rate exists from the average flow rate value. The change decision is performed using the current average flow rate and the prior average flow rate. The current average flow rate is stored in the flow rate change decision unit 13 in a time scale manner. That is, in the flow rate change decision unit B, the average flow rate value calculated by the average flow rate calculation unit 12 at this time is compared to the prior average flow rate, it is determined whether or not there is a change of more than a preset flow rate, and it is determined whether or not there is a use start of the appliance or there is a flow rate change. For example, when a user uses a hot water heater 4, the flow rate value is changed from zero to a predetermined flow rate, or when the hot water heater 4 or the like is used while other appliances are used, based on whether or not the flow rate change rate or the flow rate change amount from the obtained average flow rate and the prior average flow rate are greater than or equal to a predetermined value, it is determined whether or not there is a use/stop of the appliance or whether there is a flow rate change.

Moreover, when the flow rate change is detected by the flow rate change decision unit 13, it is decided that there is a use start of the appliance or a use stop of the appliance, specifically, when the appliance is used, the flow rate change is set in the flow rate registration unit 14 as a registered flow rate value. Herein, the flow rate registration unit 14 includes an increase flow rate registration unit 14a and a decrease flow rate registration unit 14b. Whenever a change in flow rate which is an increase is detected, it is decided that an appliance is additionally used, and the flow rate change is newly set as the flow rate registration value on each occasion. Conversely, when the use of the appliance is stopped, it is decided that the appliance is stopped and the registered flow rate value close to the flow rate change among the registered flow rate values registered in the flow rate registration unit 14 is deleted from the flow rate registered values. Similarly, in the deletion processing, whenever a change in flow rate decrease is detected, it is detected that the use of the appliance is stopped, and the deletion processing of the registered flow rate value is carried out on each occasion. When the flow rate change does not coincide with the registered flow rate, a minimum registered flow rate between the respective registered flow rates and the flow rate change amount, or a change ratio between a difference between the respective registered flow rates and the flow rate change amount and the registered flow rate is obtained, the minimum flow rate value is reduced and corrected by the flow rate change value, the flow rate change of the recent appliance is decided, and the registered values are changed in ascending order.

Next, in the registered flow rate summarization unit 15, the total flow rate of the flow rate values registered in the flow rate registration unit 14 is obtained. The flow rate difference decision unit 16 obtains the flow rate difference from the average flow rate of all the use appliances obtained in the average flow rate calculation unit 12 and the total value of the registered flow rates in the registered flow rate summarization unit 15. When the flow rate difference appears, it is input to the flow rate registration unit 14 again, the flow rate of the flow rate difference is registered, or the flow rate difference is reduced from the minimum flow rate value of the registered flow rate to be corrected. The operation is carried out until the flow rate difference does not appear.

Moreover, the abnormality decision unit 17 performs the monitoring of the use appliance by the set registered flow rate. The monitoring value memory unit 18 stores a limitation time value of the usage time corresponding to each flow rate region, a monitoring decision value of the using maximum flow rate or the like. For example, a total flow rate cutoff value for monitoring such a state where a pipe, which supplies the gas to a stove or the like, falls out due to a certain cause, an abnormally large flow rate is generated, and a limitation time of the usage time cutoff in which the limitation time of the usage time is defined to correspond to a case of being used to be far longer than the normal maximum usage time of the appliance, or the like are stored in the monitoring memory unit 18. By comparing and deciding the setting value and the registered flow rate value of the flow rate registration unit 14 using the abnormality decision unit 17, it is monitored whether or not the registered flow rate value does not exceed the usage maximum flow rate value, or the usage time of the appliance does not exceed the limitation time of the continuous use corresponding to the registered flow rate. The cutoff signal is transmitted to the cutoff unit 19 when the abnormality is decided by the abnormality decision unit 17 to stop the gas supply. Furthermore, the notification communication unit 20 displays the cutoff state or the cutoff contents on a liquid crystal display element or the like and notifies a center of the gas provider who performs a safety monitoring of the gas by communication such as a telephone line.

Next, the operation of the gas cutoff device 2 having such a configuration will be described. When a gas appliance in a user's house such as the hot water heater 4, or the gas fan heater 9 is used, the flow rate thereof is detected by the flow rate detection unit 10. For example, in the case of using an ultrasonic sensor, the propagation time of the ultrasonic signal is measured as a detection value, the signal is sent to the flow rate calculation unit 11, converted as the instant flow rate value, and is calculated as an average flow rate value for each predetermined time by the average flow rate calculation unit 12. The obtained average flow rate is periodically subjected to determination as to whether or not the appliance flow rate change appears by the flow rate change decision unit 13. In the flow rate change decision unit 13, after the determination of the flow rate change, a plurality of average flow rates are stored in time series. Whether or not the flow rate change appears is obtained from the past flow rates (for example, the flow rate memory value of the last time, the time before last, the time N times before or the like) stored in the flow rate change decision unit 13 and the current average flow rate. That is, the use of the appliance or the stopping of use of the appliance is decided from the change state thereof using the average flow rate to be output at a predetermined interval, the flow rate change of the change time is set as the registered flow rate of the use appliance and is newly registered in the flow rate registration unit 14, or the registered flow rate, which has been already registered, is reduced and corrected, or is deleted, whereby it is possible to accurately set the registered flow rate corresponding to the use appliance at the time point of the change.

For example, when the hot water heater 4 is used, in a case where the past flow rate is zero, the flow rate is changed to 1500 L/h or the like, and it is determined whether or not the change appears by comparing the current average flow rate and the past average flow rate and. When the change rate or the change amount is greater than or equal to a predetermined value, it is determined that the change appears, it is decided that a certain appliance is used, and it is registered in the flow rate registration unit 14. Otherwise, when the hot water heater 4 is used during the use of the table gas stove 8, the flow rate of the table gas stove 8 is stored in the past flow rates of the flow rate change decision unit 13, in the flow rate change decision unit 13, the change flow rate is obtained from the current average flow rate and a memory value of the past flow rate. And similarly, when the change rate from the current flow rate or the change flow rate is greater than or equal to a predetermined value, it is decided that the change exists and the change flow rate is registered in the flow rate registration unit 14. Herein, in the flow rate registration unit 14, the average flow rate obtained at the time when the flow rate change appears is input in the increase flow rate registration unit 14a and the decrease flow rate re-registration unit 14b. When the decision signal which indicates the flow rate increase is input by the flow rate change decision unit 13, the increase flow rate from the average flow rate of the last time is registered. Furthermore, while a plurality of appliances is used, any one of the appliances is stopped, or when the flow rate is changed, the flow rate change decision unit 13 decides whether the decrease change appears from a memory value of the past flow rate and the average flow rate, and outputs the decrease change flow rate. Then, the flow rate registration unit 14 deletes or reduces the nearest flow rate registration value to the decrease change flow rate among the registered flow rates. When the flow rate change amount does not coincide with the registered flow rate value, a registered flow rate having the minimum difference from the flow rate change amount among the registered flow rates is obtained or change rates to the difference between the respective registered flow rates and the flow rate change amount from the registered flow rate are obtained, and the flow rate value having the minimum difference is reduced and corrected by the flow rate change value. Then, the flow rate change of the nearest appliance is decided, and the registration values are changed in ascending order.

Additionally, all of the registered flow rate values are added together by the registered flow rate summarization unit 15, and the total flow rate is obtained. In the flow rate difference decision unit 16, the flow rate difference is obtained from the obtained average flow rate and the registered flow rate total value. When the flow rate difference is not zero, it is decided that the use appliance flow rate is not registered in the flow rate registration unit 14 to be monitored, and the flow rate of the flow rate difference is registered again. When the flow rate difference is positive, that is, when the average flow rate of the appliance use is greater than the registration total flow rate, it is decided that the registered flow rate is small, and the flow rate is registered in an order of size by the increase flow rate registration unit 14a of the flow rate registration unit 14. Furthermore, when the flow rate difference is negative, in a case where the use flow rate is smaller than the registration total flow rate, it is decided that the monitoring flow rate is high, and the flow rate of the flow rate difference is sequentially reduced and corrected from the minimum registered flow rate. When the flow rate is not sufficiently reduced, then the second minimum flow rate registration value is reduced. As a consequence, the correction is performed until the flow rate difference does not exist. In this case, since the maximum flow rate registration value is not affected, the usage time monitoring is continuously performed.

Regarding the use form of the hot water heater 4 during the use of the table gas stove 8 or the gas fan heater 9, the combustion amount is greatly changed in a case where the load is high in the initial operation and in a case where the load is low in the stable state when being used in the floor heating or the like, or when the state where the initial difference between the water temperature and the setting temperature is high in the shower or the like becomes stable. In this case, the increase flow rates of the table gas stove 8 and the gas fan heater 9 are registered and also the flow rate of the hot water heater 4 is registered by the increase flow rate registration unit 14a of the flow rate registration unit 14. The flow rate change exists at the beginning of the operation of the hot water heater 4, and the use flow rate of the hot water heater 4, that is, the average flow rate value at this point of time is registered in the flow rate registration unit 14 as a registered flow rate. Moreover, when the operation is continued and the temperature is stable, the combustion amount, that is, the gas flow rate is controlled by being decreased by proportional control; however, the gas flow rate is gradually changed in some cases. In these cases, minute change which the flow rate change decision unit 13 cannot decide as existing of the change is continued for a long period. In this case, since the flow rate change does not exist, the registration value of the flow rate registration unit 14 is not changed. Then, when the hot water heater 4 is stopped, it is decided that the flow rate is in a decrease direction by the flow rate change decision unit 13, and the registered flow rate corresponding to the reduced flow rate is deleted by the decrease flow rate re-generation unit 14b. At this time, at every flow rate decision timing, or whenever the average flow rate is obtained, the total value of the registered flow rate is calculated. The flow rate difference is obtained so that the newly obtained average flow rate caused due to the appliance change coincides with the total value of the registered flow rate. When there is a flow rate difference and the registered flow rate is small, the flow rate difference is registered as a new flow rate. Conversely, when the registered flow rate is large, the flow rate is reduced and corrected from the minimum registered flow rate of the registered flow rates by the flow rate difference and is registered again. That is, regarding the flow rates of the table gas stove 8 and the gas fan heater 9, as a consequence of the flow rate decrease of the hot water heater 4 which is actually used, but the flow rate is not changed in, the flow rate monitoring is prevented in a state in which the registered total flow rate value does not coincide with the detected average flow rate value (that is, all the flow rate values of the actual flow rate). When the flow rate difference is negative, that is, when the registration total flow rate is higher than the actually used flow rate, the flow rate is corrected beginning from the lowest flow rate registration value. Thus, the division of the usage time monitoring of the maximum registered flow rate value is not affected. Conversely, when the flow rate difference is positive, that is, when the registration total flow rate is smaller than the actually-used flow rate, the differential flow rate is unclear in a change between the same and any flow rate of the currently registered flow rate values, and in this case, the flow rate is registered as it is. By adding the differential flow rate to the maximum registered flow rate value, the usage time monitoring division becomes large, the limitation time enabling use as the appliance is shortened, and deterioration in the convenience is prevented.

Moreover, the abnormality decision unit 17 monitors the use appliance with reference to the usage time limitation time in the monitoring memory unit 18 by the reset registered flow rate. When the monitoring time elapses and the abnormality is generated, the cutoff unit 19 is operated to stop the supply of the gas, whereby the safety is secured.

In addition, the numerical limitation used in the present embodiment is an example, and the use form is also not limited to the present embodiment.

As mentioned above, when the large flow rate change such as stopping of an appliance during use is detected from a state in which the flow rate change greater than a predetermined value is not detected by the flow rate change decision unit 13, in a case where a flow rate difference between the total flow rate value of the registered plurality of appliances and the actual use flow rate occurs, by registering the obtained flow rate difference again, the appliance flow rate during actual use can be monitored by the abnormality decision unit 17, the suitable use limitation function corresponding to the use appliance can be secured, an erroneous cutoff due to an erroneous usage time monitoring can be prevented, in the abnormal use of the appliance, the delayed cutoff or the early cutoff can be prevented, the safety and the reliability are extremely high, and an unnecessary mobilization of a gas supplier due to the early cutoff can be prevented, and the convenience is high.

### (Second Embodiment)

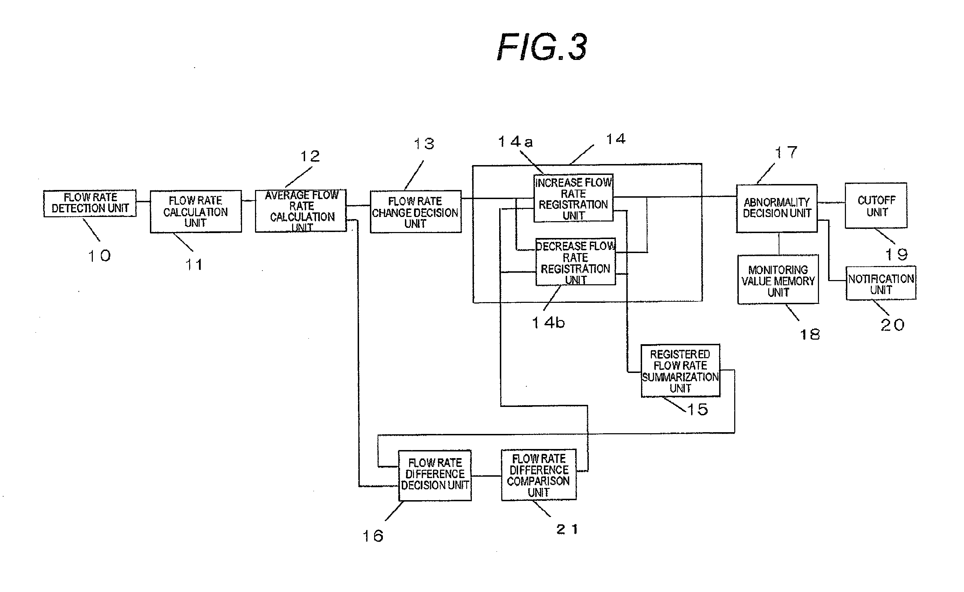

Fig. 3 is a control block diagram of a gas cutoff device in a second embodiment of the present invention. Members having the same functions as Figs. 1, 2 and 4 are denoted by the same reference numerals.

In Fig. 3, reference numeral 21 is a flow rate difference comparison unit that outputs a flow rate registration correction request after the flow rate difference decision unit 16 obtains the flow rate difference from the outputs of the registered flow rate summarization unit 15 and the average flow rate calculation unit 12. However, when the flow rate difference is greater than or equal to a predetermined flow rate value corresponding to the appliance flow rate, it outputs the flow rate difference and a registration correction signal to the flow rate registration unit 14.

Next, the operation of the gas cutoff device 2 having such a configuration will be described. When a gas appliance in a user's house such as the hot water heater 4, or the gas fan heater 9 is used, the flow rate thereof is detected by the flow rate detection unit 10. For example, in the case of using an ultrasonic sensor, the propagation time of the ultrasonic signal is measured as a detection value, the signal is sent to the flow rate calculation unit 11, converted as the instant flow rate value, and is calculated as an average flow rate value for each predetermined time by the average flow rate calculation unit 12. The obtained average flow rate is periodically subjected to determination as to whether or not the appliance flow rate change appears by the flow rate change decision unit 13. In the flow rate change decision unit 13, after the determination of the flow rate change, a plurality of average flow rates are stored in time series. Whether or not the flow rate change appears is obtained from the past flow rates (for example, the flow rate memory value of the last time, the time before last, the time N times before or the like) stored in the flow rate change decision unit 13 and the current average flow rate. That is, the use of the appliance or the stopping of use of the appliance is decided from the change state thereof using the average flow rate to be output at a predetermined interval, the flow rate change of the change time is set as the registered flow rate of the use appliance and is newly registered in the flow rate registration unit 14, or the registered flow rate, which has been already registered, is reduced and corrected, or is deleted, whereby it is possible to accurately set the registered flow rate corresponding to the use appliance at the time point of the change.

For example, when the hot water heater 4 is used, in a case where the past flow rate is zero, the flow rate is changed to 1500 L/h or the like, and it is determined whether or not the change appears by comparing the current average flow rate and the past average flow rate and. When the change rate or the change amount is greater than or equal to a predetermined value, it is determined that the change appears, it is decided that a certain appliance is used, and it is registered in the flow rate registration unit 14. Otherwise, when the hot water heater 4 is used during the use of the table gas stove 8, the flow rate of the table gas stove 8 is stored in the past flow rates of the flow rate change decision unit 13, in the flow rate change decision unit 13, the change flow rate is obtained from the current average flow rate and a memory value of the past flow rate. And similarly, when the change rate from the current flow rate or the change flow rate is greater than or equal to a predetermined value, it is decided that the change exists and the change flow rate is registered in the flow rate registration unit 14. Herein, in the flow rate registration unit 14, the average flow rate obtained at the time when the flow rate change appears is input in the increase flow rate registration unit 14a and the decrease flow rate re-registration unit 14b. When the decision signal which indicates the flow rate increase is input by the flow rate change decision unit 13, the increase flow rate from the average flow rate of the last time is registered. Furthermore, while a plurality of appliances is used, any one of the appliances is stopped, or when the flow rate is changed, the flow rate change decision unit 13 decides whether the decrease change appears from a memory value of the past flow rate and the average flow rate, and outputs the decrease change flow rate. Then, the flow rate registration unit 14 deletes or reduces the nearest flow rate registration value to the decrease change flow rate among the registered flow rates. When the flow rate change amount does not coincide with the registered flow rate value, a registered flow rate having the minimum difference from the flow rate change amount among the registered flow rates is obtained or change rates to the difference between the respective registered flow rates and the flow rate change amount from the registered flow rate are obtained, and the flow rate value having the minimum difference is reduced and corrected by the flow rate change value. Then, the flow rate change of the nearest appliance is decided, and the registration values are changed in ascending order.

Additionally, all of the registered flow rate values are added together by the registered flow rate summarization unit 15, and the total flow rate is obtained. In the flow rate difference decision unit 16, the flow rate difference is obtained from the obtained average flow rate and the registered flow rate total value. When the flow rate difference is not zero, it is decided that the use appliance flow rate is not registered in the flow rate registration unit 14 to be monitored, and the flow rate of the flow rate difference is registered again is decided by the flow rate difference comparison unit 21. In the flow rate difference comparison unit 21, when the flow rate difference between the actual flow rate and the registered flow rate corresponds to the appliance flow rate (21 L/h or more for an LP gas, and, 51.82 L/h or more, for instance, for a city gas), the registration is performed again. When the flow rate is positive and greater than or equal to a predetermined value, that is, when the average flow rate of the appliance use is greater than or equal to the registration total flow rate by the predetermined value, it is decided that the registered flow rate is small, and the flow rate difference flow rate is registered in order of size by the increase flow rate registration unit 14a of the flow rate registration unit 14. Furthermore, when the flow rate difference is greater than or equal to a negative predetermined value, that is, when the use flow rate is equal to or smaller than the registration total flow rate by a predetermined flow rate, it is decided that the registered monitoring flow rate is high and the correction is insufficient, and the flow rate of the flow rate difference is sequentially reduced and corrected from the minimum registered flow rate. When the flow rate is not sufficiently reduced, then the second minimum flow rate registration value is reduced. As a consequence, the correction is performed until the flow rate difference does not exist. In this case, since the maximum flow rate registration value is not affected, the usage time monitoring is continuously performed.

Regarding the use form of the hot water heater 4 during the use of the table gas stove 8 or the gas fan heater 9, the combustion amount is greatly changed in a case where the load is high in the initial operation and in a case where the load is low in the stable state when being used in the floor heating or the like, or when the state where the initial difference between the water temperature and the setting temperature is high in the shower or the like becomes stable. In this case, the increase flow rates of the table gas stove 8 and the gas fan heater 9 are registered and also the flow rate of the hot water heater 4 is registered by the increase flow rate registration unit 14a of the flow rate registration unit 14. The flow rate change exists at the beginning of the operation of the hot water heater 4, and the use flow rate of the hot water heater 4, that is, the average flow rate value at this point of time is registered in the flow rate registration unit 14 as a registered flow rate. Moreover, when the operation is continued and the temperature is stable, the combustion amount, that is, the gas flow rate is controlled by being decreased by proportional control; however, the gas flow rate is gradually changed in some cases. In these cases, minute change which the flow rate change decision unit 13 cannot decide as existing of the change is continued for a long period. In this case, since the flow rate change does not exist, the registration value of the flow rate registration unit 14 is not changed. Then, when the hot water heater 4 is stopped, it is decided that the flow rate is in a decrease direction by the flow rate change decision unit 13, and the registered flow rate corresponding to the reduced flow rate is deleted by the decrease flow rate re-generation unit 14b. At this time, at every flow rate decision timing, or whenever the average flow rate is obtained, the total value of the registered flow rate is calculated. The flow rate difference is obtained so that the newly obtained average flow rate caused due to the appliance change coincides with the total value of the registered flow rate. When there is a flow rate difference and the registered flow rate is small, the flow rate difference is registered as a new flow rate. Conversely, when the registered flow rate is large, the flow rate is reduced and corrected from the minimum registered flow rate of the registered flow rates by the flow rate difference and is registered again. That is, regarding the flow rates of the table gas stove 8 and the gas fan heater 9, as a consequence of the flow rate decrease of the hot water heater 4 which is actually used, but the flow rate is not changed in, the flow rate monitoring is prevented in a state in which the registered total flow rate value does not coincide with the detected average flow rate value (that is, all the flow rate values of the actual flow rate). When the flow rate difference is equal to or greater than negative predetermined value, that is, when the registration total flow rate is higher than the actually used flow rate, the flow rate is corrected beginning from the lowest flow rate registration value. Thus, the division of the usage time monitoring of the maximum registered flow rate value is not affected. Conversely, when the flow rate difference is equal to or greater than positive predetermined value, that is, when the registration total flow rate is smaller than the actually-used flow rate, the differential flow rate is unclear in a change between the same and any flow rate of the currently registered flow rate values, and in this case, the flow rate is registered as it is. By adding the differential flow rate to the maximum registered flow rate value, the usage time monitoring division becomes large, the limitation time enabling use as the appliance is shortened, and deterioration in the convenience is prevented.

Moreover, the abnormality decision unit 17 monitors the use appliance with reference to the usage time limitation time in the monitoring memory unit 18 by the reset registered flow rate. When the monitoring time elapses and the abnormality is generated, the cutoff unit 19 is operated to stop the supply of the gas, whereby the safety is secured.

In addition, the numerical limitation used in the present embodiment is an example, and the use form is also not limited to the present embodiment.

As mentioned above, when the large flow rate change such as stopping of an appliance during use is detected from a state in which the flow rate change greater than a predetermined value is not detected by the flow rate change decision unit 13, in a case where a flow rate difference between the total flow rate value of the registered plurality of appliances and the actual use flow rate occurs, by registering the obtained flow rate difference again, the appliance flow rate during actual use can be monitored by the abnormality decision unit 17, the suitable use limitation function corresponding to the use appliance can be secured, an erroneous cutoff due to an erroneous usage time monitoring can be prevented, in the abnormal use of the appliance, the delayed cutoff or the early cutoff can be prevented, the safety and the reliability are extremely high, and an unnecessary mobilization of a gas supplier due to the early cutoff can be prevented, and the convenience is high.

In addition, all or a part of the units of the gas cutoff device described in the first and second embodiments can be similarly carried out by using a program which is executed in a computer. In this case, the program can be easily implemented using a micro computer, and the distribution or task of installing the program can be simplified by distributing the program using a communication circuit or by recording on a recording medium.

### Industrial Applicability

As mentioned above, the gas cutoff device according to the present invention suitably promotes the limitation function of the usage time of the appliance in which the usage amount is minutely changed, and can be applied to an overall appliance-monitoring apparatus relating to water amount monitoring by a water supply meter or used electricity amount monitoring apparatus for each appliance of a digital electric power meter, or the like.

### Reference Signs List

- 10: flow rate detection unit
- 11: flow rate calculation unit
- 12: average flow rate calculation unit
- 13: flow rate change decision unit
- 14: flow rate registration unit
- 15: registered flow rate summarization unit
- 16: flow rate difference decision unit
- 17: abnormality decision unit
- 18: monitoring value memory unit
- 19: cutoff unit
- 20: notification communication unit
- 21: flow rate difference comparison unit

## Claims

1. A gas cutoff device (2) that monitors using states of a plurality of gas appliances and cuts off the supply of gas at the time of abnormality occurrence, the gas cutoff device comprising:
a flow rate detection unit (10) that is configured to measure a flow rate;
a flow rate calculation unit (11) that is configured to calculate values of instant flow rates from a detection value of the flow rate detection unit (10);
an average flow rate calculation unit (12) that is configured to obtain an average flow rate from the instant flow rates obtained by the flow rate calculation unit (11);
a flow rate change decision unit (13) that is configured to decide whether or not an appliance change flow rate appears based on the obtained average flow rate;
an increase flow rate registration unit (14a) that is configured to register, as a registered flow rate, an amount of the flow rate change at the time of increase change decision by the flow rate change decision unit (13);
a decrease flow rate registration unit (14b) that is configured to reduce and correct the registered flow rate near an amount of the flow rate change at the time of decrease change decision by the flow rate change decision unit (13);
a registered flow rate summarization unit (15) that is configured to calculate a total value of the registered flow rate;
a flow rate difference decision unit (16) that is configured to calculate a flow rate difference from the average flow rate and the registration total flow rate, to cause the increase flow rate registration unit (14a) to register the flow rate difference when the flow rate difference is positive, and to cause the decrease flow rate registration unit (14b) to perform a flow rate output which reduces and corrects the registered flow rate from a low level when the flow rate difference is negative;
an monitoring value memory unit (18) that is configured to store a decision value for monitoring usage states of the appliances;
an abnormality decision unit (17) that is configured to decide whether or not an abnormality exists from the registered flow rate of the flow rate registration unit (14) and the decision value of the monitoring value memory unit (18); and
a cutoff unit (19) that is configured to cut off the supply of gas at the time of an abnormality decision established by the abnormality decision unit (17).

2. The gas cutoff device (2) according to claim 1, further comprising:
a flow rate difference comparison unit (21) that is configured to cause the registration by the increase flow rate registration unit (14a) or the decrease correction by the decrease flow rate registration unit (14b) only when the flow rate difference is greater than or equal to a predetermined value.

## Patentansprüche

1. Gasabschaltvorrichtung (2), die Verwendungszustände bzw. Gebrauchszustände von einer Vielzahl von Gasvorrichtungen überwacht und die Zufuhr von Gas zur Zeit eines Stattfindens einer Abnormität bzw. Ungewöhnlichkeit oder Unregelmäßigkeit abschaltet, wobei die Gasabschaltvorrichtung aufweist:
eine Flussratendetektionseinheit (10), die konfiguriert ist, um eine Flussrate zu messen;
eine Flussratenberechnungseinheit (11), die konfiguriert ist, um Werte von momentanen bzw. augenblicklichen oder gegenwärtigen Flussraten zu berechnen, und zwar von einem Detektionswert der Flussratendetektionseinheit (10);
eine Durchschnittsflussratenberechnungseinheit (12), die konfiguriert ist, um eine Durchschnittsflussrate von den momentanen bzw. augenblicklichen oder gegenwärtigen Flussraten zu erhalten, die durch die Flussratenberechnungseinheit (11) erhalten wurden;
eine Flussratenänderungsentscheidungseinheit (13), die konfiguriert ist, um zu entscheiden, ob oder ob nicht eine Vorrichtungsänderungsflussrate erscheint, und zwar basierend auf der erhaltenen Durchschnittsflussrate;
eine Anstiegsflussratenregistriereinheit (14a), die konfiguriert ist, um einen Umfang der Flussratenänderung zum Zeitpunkt der Anstiegsänderungsentscheidung durch die Flussratenänderungsentscheidungseinheit (13) als eine registrierte Flussrate zu registrieren;
eine Abnahmeflussratenregistriereinheit (14b), die konfiguriert ist, um die registrierte Flussrate nahe eines Umfangs der Flussratenänderung zum Zeitpunkt der Abnahmeänderungsentscheidung durch die Flussratenänderungsentscheidungseinheit (13) zu reduzieren und zu korrigieren;
eine Summierungseinheit (15) für registrierte Flussraten, die konfiguriert ist, um den Gesamtwert der registrierten Flussrate zu berechnen;
eine Flussratendifferenzentscheidungseinheit (16), die konfiguriert ist, um eine Flussratendifferenz von der Durchschnittsflussrate und der registrierten Gesamtflussrate zu berechnen, um die Anstiegsflussratenregistriereinheit (14a) zu bewirken, die Flussratendifferenz zu registrieren, wenn die Flussratendifferenz positiv ist, und die Abnahmeflussratenregistriereinheit (14b) zu bewirken, eine Flussratenausgabe durchzuführen, welche die registrierte Flussrate reduziert und korrigiert, und zwar von einem niedrigen Niveau, wenn die Flussratendifferenz negativ ist;
eine Überwachungswertspeichereinheit (18), die konfiguriert ist, um einen Entscheidungswert zum Überwachen der Verwendungszustände bzw. Gebrauchszustände der Vorrichtungen zu speichern;
eine Abnormitätsentscheidungseinheit (17), die konfiguriert ist, um zu entscheiden, ob oder ob nicht eine Abnormität bzw. Ungewöhnlichkeit oder Unregelmäßigkeit existiert, und zwar von der registrierten Flussrate der Flussratenregistriereinheit (14) und dem Entscheidungswert der Überwachungswertspeichereinheit (18); und
eine Abschalteinheit (19), die konfiguriert ist, um die Zufuhr von Gas zum Zeitpunkt einer Abnormitätsentscheidung bzw. Ungewöhnlichkeitsentscheidung oder Unregelmäßigkeitsentscheidung, die durch die Abnormitätsentscheidungseinheit (17) etabliert wurde, abzuschalten.

2. Gasabschaltvorrichtung (2) nach Anspruch 1, weiter aufweisend:
eine Flussratendifferenzvergleichseinheit (21), die konfiguriert ist, um die Registrierung durch die Anstiegsflussratenregistriereinheit (14a) oder die Abnahmekorrektur durch die Abnahmeflussratenregistriereinheit (14b) zu bewirken, und zwar nur wenn die Flussratendifferenz größer als oder gleich einem vorbestimmten Wert ist.

## Revendications

1. Dispositif coupe-circuit de gaz (2) surveillant des états d'utilisation d'une pluralité d'appareils à gaz et coupant l'alimentation en gaz au moment de la survenue d'une anomalie, le dispositif coupe-circuit comprenant :
une unité de détection de débit (10) configurée pour mesurer un débit;
une unité de calcul de débit (11) configurée pour calculer des valeurs de débit instantané à partir d'une valeur de détection fournie par l'unité de détection de débit (10) ;
une unité de calcul de débit moyen (12) configurée pour obtenir un débit moyen à partir des débits instantanés obtenus par l'unité de calcul de débit (11) ;
une unité de détermination d'un changement de débit (13) configurée pour déterminer si, oui ou non, il apparaît un changement de débit d'un appareil à partir de la valeur de débit moyenne obtenue ;
une unité d'enregistrement d'une augmentation du débit (14a) configurée pour enregistrer, en tant que débit enregistré, une ampleur du changement de débit au moment où l'unité de détermination de changement de débit (13) détermine qu'il y a augmentation du débit ;
une unité d'enregistrement d'une diminution du débit (14a) configurée pour réduire et corriger le débit enregistré proche d'un montant de changement de débit au moment où l'unité de détermination de changement de débit (13) détermine qu'il y a diminution du débit ;
une unité de synthèse des débits enregistrés (15) configurée pour calculer une valeur totale du débit enregistré ;
une unité de détermination d'une différence de débit (16) configurée pour calculer une différence de débit entre le débit moyen et le débit total enregistré, afin de provoquer l'enregistrement, par l'unité d'enregistrement d'une augmentation du débit (14a), de la différence de débit lorsque la différence de débit est positive et de provoquer l'émission, par l'unité d'enregistrement d'une diminution du débit (14b), d'un débit de consigne réduisant et corrigeant le débit enregistré à partir d'un niveau faible lorsque la différence de débit est négative ;
une unité de stockage de valeur de surveillance (18) configurée pour stocker une valeur de détermination pour surveiller les états d'utilisation des appareils ;
une unité de détermination d'anomalie (17) configurée pour déterminer si, oui ou non, il existe une anomalie, à partir du débit enregistré de l'unité d'enregistrement de débit (14) et de la valeur de décision de l'unité de stockage de valeur de surveillance (18) ;et
une unité coupe-circuit (19) configurée pour couper l'alimentation en gaz au moment où l'unité de détermination d'anomalie (17) détermine la présence d'une anomalie.

2. Dispositif coupe-circuit de gaz (2) selon la revendication 1, comportant en outre :
une unité de comparaison d'une différence de débit (21) configurée pour provoquer l'enregistrement, par l'unité d'enregistrement d'augmentation de débit (14a), ou la correction de diminution, par l'unité d'enregistrement de diminution de débit (14b), seulement lorsque la différence de débit est supérieur ou égale à une valeur prédéterminée.
